# EUROPEAN PATENT APPLICATION

(11) **EP 4 742 771 A1**
(43) Date of publication of application: **13.05.2026**
(21) Application number: 24211398.3
(22) Date of filing: 07.11.2024
(51) Int. Cl.: H04W 52/02

(54) **METHOD FOR USING A USER EQUIPMENT WITH A MOBILE COMMUNICATION NETWORK AND/OR FOR AN ENERGY-SAVING OPERATION OF THE USER EQUIPMENT WITH THE MOBILE COMMUNICATION NETWORK, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for using a user equipment with a mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated, in a subsequent second point in time, from the energy-saving mode by means of a predefined uplink radiofrequency signal transmitted by the user equipment,
wherein, in the energy-saving mode, the specific base station entity refrains from transmitting system information block 1 and starts to transmit system information block 1 at least once after having been activated from the energy-saving mode,
wherein the predetermined uplink radiofrequency signal corresponds to a specific uplink random access channel signal being assigned to the specific base station entity,
wherein, in order to operate the mobile communication network, at least partly, in an energy-saving operation, the method comprises the following steps:
-- in a first step, the user equipment receives, from the specific base station entity and/or from a different base station entity, activation configuration information, the activation configuration information comprising at least a first piece of assignment information and a second piece of assignment information, wherein each piece of assignment information indicates at least one specific uplink random access channel signal and wherein each piece of assignment information and/or each specific uplink random access channel signal is associated to, or related to, at least one piece of validity time indication,
-- in a second step, the user equipment transmits, based on the content of the activation configuration information and based on a determination of a current point in time, one of the specific uplink random access channel signals in order to activate the specific base station entity from the energy-saving mode.

## Description

### BACKGROUND

The present invention relates a method for using a user equipment with a mobile communication network and/or for an energy-saving operation of the mobile communication network , wherein the mobile communication network comprises a radio access network comprising a plurality of base station entities, wherein a specific base station entity is operated, in a first point in time, in an energy-saving mode and wherein the specific base station entity is activated, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 at least once after having been activated from the energy-saving mode.

Furthermore, the present invention relates to a user equipment for being used with a mobile communication network and/or being configured for an energy-saving operation of the mobile communication network, wherein the user equipment is configured to communicate with the mobile communication network via a radio access network of the mobile communication network that comprises a plurality of base station entities, a specific base station entity being operated in an energy-saving mode and the specific base station entity being activated from the energy-saving mode by means of the user equipment transmitting a predefined uplink radiofrequency signal, wherein, in the energy-saving mode of the specific base station entity, the user equipment fails to receive system information block 1 therefrom, and the user equipment receives system information block 1 while the specific base station entity being activated from the energy-saving mode.

Additionally, the present invention relates to a system or mobile communication network for using a user equipment with the mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 at least once after having been activated from the energy-saving mode.

Furthermore, the present invention relates to a program and to a computer-readable medium for using a user equipment with a mobile communication network and/or for an energy-saving operation of the user equipment with the mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).

Especially during periods of low usage of the mobile communication network, the situation exists that base station entities are not used at all, i.e. in at least one network cell or some network cells of the typically cellular mobile communication network, there are no mobile devices present at all that request a communication service from the mobile communication network. It would be desirable to reduce the power consumption of especially those base stations or base station entities in periods of low usage of the mobile communication network. Presently, it is possible to monitor the network usage, e.g. by means of an operations and maintenance/management center (OMC) controlling the mobile communication network. In case that low network usage (or absence of network usage) is detected in one network cell or in a plurality of network cells, it would be possible to switch off at least partly the corresponding network equipment such as base station entities or other network components.

In this respect, switching off of base station entities (or switching down) could especially mean that at least some parts of the system information (especially corresponding to system information block 1) that is, normally (i.e. while the base station entity is switched on), transmitted regularly in the corresponding radio cell (i.e. repeatedly with a comparatively small repetition period, i.e. comparatively often such as every couple of 10 ms, e.g. every 80 ms) is not transmitted, thus saving the corresponding power or energy required for transmission.

### SUMMARY

An object of the present invention is to provide a technically simple, effective, cost-effective, adapted, customized, and, especially, an energy-saving solution for using a user equipment with a mobile communication network having the base station entities of the mobile communication network only providing service when there is the necessity for it and in a manner such that the user experience - of a user or a user equipment used with a mobile communication network and/or in an energy-saving operation of the mobile communication network and/or the user equipment with the mobile communication network - is either enhanced or, at least, only reduced in the least possible way. A further object of the present invention is to provide a corresponding user equipment, a corresponding system or mobile communication network, and a corresponding program and computer-readable medium.

The object of the present invention is achieved by a method for using a user equipment with a mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 at least once after having been activated from the energy-saving mode, wherein the predetermined uplink radiofrequency signal corresponds to a specific uplink random access channel signal being assigned to the specific base station entity, wherein, in order to operate the mobile communication network, at least partly, in an energy-saving operation, the method comprises the following steps:
-- in a first step, the user equipment receives, from the specific base station entity and/or from a different base station entity, activation configuration information, the activation configuration information comprising at least a first piece of assignment information and a second piece of assignment information, wherein each piece of assignment information indicates at least one specific uplink random access channel signal and wherein each piece of assignment information and/or each specific uplink random access channel signal is associated to, or related to, at least one piece of validity time indication ,
-- in a second step, the user equipment transmits, based on the content of the activation configuration information and based on a determination of a current point in time, one of the specific uplink random access channel signals in order to activate the specific base station entity from the energy-saving mode.

It is thereby advantageously possible according to the present invention to realize and enable a more adapted, more customized, effectively scheduled and energy-saving way of having only base stations (a specific one or a plurality thereof) transmit the SIB 1 (especially only) in periods of time during which it is actually needed (in order to provide service to a (requesting) user equipment) - i.e. refrain from transmitting the SIB 1 during other periods of time - and nevertheless being ready to (be waked up and) provide service to one or a plurality of user equipments. According to the present invention, this is advantageously accomplished by having the user equipment receive an activation configuration information, from the specific base station entity and/or from a different base station entity, which in turn comprises at least a first and a second piece of assignment information, each of both, in turn, indicating at least one specific uplink random access channel signal that is to be used for an activation of the transmission of system information block 1 depending on at least one piece of validity time indication that is associated or related to each piece of assignment information and/or to each specific uplink random access channel signal. This enables the user equipment to be provided with an effective time schedule in order to be informed about when the specific base station entity (or type thereof) can be activated using a particular piece of assignment information, especially using a particular specific uplink random access channel signal, in order to provide service at that particular time and/or for a particular use case, while other base station entities, which are not needed at that particular time and/or for that particular use case, might be operated without transmission of the system information block 1, i.e. in the energy-saving mode.

Thereby, it is advantageously possible to achieve an overall reduction of power consumption of the mobile communication network as it is possible to, firstly, prevent the energy that would otherwise be needed to transmit the system information block 1 from being wasted, and, secondly, reduce the operation time and/or power consumption of essential and auxiliary base station components such as amplifier circuits and cooling entities.

According to the present invention, it is possible and preferred that the specific base station entity is either activated from the energy-saving mode by having the specific base station entity receive the specific uplink random access channel signal directly, or, alternatively, the specific base station entity is activated from the energy-saving mode indirectly by having the different base station entity (e.g. a nearby different base station entity) receive the specific uplink random access channel signal, and, subsequently, by having the different base station entity either activate the specific base station entity directly or by starting a chain of activation steps performed by a subset of base station entities out of the plurality of base station entities, possibly including the plurality of base station entities as a whole, each activation step possibly being executed by a single base station entity out of the subset of base station entities or out of the plurality of base station entities as a whole or possibly being executed by a different functional part out of a set of functional parts of the radio access network or out of a set of functional parts of a core network of the mobile communication network.

In a further embodiment of the present invention, it is possible and preferred that the specific uplink random access channel signal is transmitted by the user equipment to the plurality of base station entities or to a subset of the plurality of base station entities, each of which being configured to be activated by the specific uplink random access channel signal, and, nevertheless, as a consequence of the transmission only one base station entity out of the plurality or out of the subset of the plurality of base station entities is activated depending on a further selection criterion, the further selection criterion especially depending on signal amplitude or received signal strength, wherein especially the base station entity that received the highest signal amplitude or highest signal strength is activated.

Still furthermore, it is also possible and preferred, according to the present invention, that the specific uplink random access channel signal - being used, in the second step, to activate the specific base station entity from the energy-saving mode - is associated to, or related to, a piece of validity time indication indicating, or corresponding to, the current point in time, wherein especially, the user equipment selects the specific uplink random access channel signal based on the current point in time as well as based on the piece of validity time indication associated or related to the specific uplink random access channel signal.

Thereby, it is advantageously possible to efficiently involve the current point in time in the process of selecting a specific uplink random access channel signal which is indicated by the time validity indication at the current point in time.

Still furthermore, it is also possible and preferred, according to the present invention, that the piece of validity time indication indicates, or defines, a specific point in time, wherein the specific point in time defines a point in time until which the respective associated or related specific uplink random access channel signal is valid and after which it is invalid, or after which the respective associated or related specific uplink random access channel signal is valid and until which it is invalid.

Thereby, it is advantageously possible to efficiently indicate to the user equipment that, regarding the ability to activate the specific base station entity from the energy-saving mode using the associated or related specific uplink random access channel signal, there is either a temporally limited admission that lasts until the specific point in time or there is a temporally limited restriction that lasts until the specific point in time.

Additionally, it is also possible and preferred, according to the present invention, that the piece of validity time indication indicates, or defines, a specific time interval, especially being defined by a first point in time and a second point in time, wherein the specific time interval especially defines the time interval during which the respective associated or related specific uplink random access channel signal is valid and outside of which it is invalid, or during which the respective associated or related specific uplink random access channel signal is invalid and outside of which it is valid.

Thereby, it is advantageously possible to efficiently indicate to the user equipment that, regarding the ability to activate the specific base station entity from the energy-saving mode using the associated or related specific uplink random access channel signal, there is either a temporally limited admission during the specific time interval, especially during one that begins at the first point in time and ends at the second point in time, or there is a temporally limited restriction during the specific time interval, especially during one that begins at the first point in time and ends at the second point in time.

Furthermore, it is also possible and preferred, according to the present invention, that the at least one piece of validity time indication indicates, or defines, the specific point in time or the specific time interval, especially the first and second point in time, by means of using an absolute validity time reference, especially an absolute validity time reference referring to the number of seconds or milliseconds after 0 am on first January 1900 according to the Gregorian calendar, corresponding to midnight between Sunday, 31 December 1899, and Monday, first January 1900.

Thereby, it is advantageously possible to efficiently and in a standardized manner indicate to the user equipment the specific point in time or the specific time interval, especially the first point in time and the second point in time.

Still furthermore, it is also possible and preferred, according to the present invention, that the user equipment receives the activation configuration information from the specific base station entity, using control plane signaling or system information signaling (especially transmitted via broadcast transmission and/or via dedicated transmission), and/or from a different base station entity using control plane signaling or system information signaling (especially transmitted via broadcast transmission and/or via dedicated transmission, wherein especially such system information signaling indicates the specific base station entity, or a group of base station entities comprising the specific base station entity), and/or from the specific base station entity or from a different base station entity using dedicated non-access stratum signaling or access stratum signaling (especially at registration of the user equipment and/or at location update of the user equipment, and/or using any radio resource control procedure during normal operation of the user equipment).

Thereby, it is advantageously possible to efficiently inform the user equipment about the activation configuration information and allow for a flexible and efficient performance of the inventive method.

Furthermore, it is also possible and preferred, according to the present invention, that the predetermined uplink radiofrequency signal corresponds to a random access channel, RACH, signal, especially a specific random access channel preamble, or to a physical random access channel, PRACH, signal, especially a specific physical random access channel preamble, wherein especially each such preamble corresponds to being transmitted, by the user equipment, at a specific point in time, especially a regularly repeating point in time, and to transmitting, by the user equipment, a radiofrequency signal being coded using a specific transmission parameter, especially a specific cyclic shift value.

A Random Access Channel, RACH, is present in mobile communication networks according to the 5G NR standard, according to the 4G/Long Term Evolution (LTE) standard and according the 3G/UMTS (WCDMA) standard. Besides being used to synchronize the uplink from the user equipment to the base station entity another purpose of the RACH is to obtain the necessary resource to perform a RRC connection request. Different physical random access channel preambles or PRACH preambles are preferably generated by applying cyclic shifting by specific values to Zadoff Chu sequences within the frequency domain.

According to the present invention, by means of transmitting a PRACH preamble the user equipment is able to activate the specific base station entity such that as a result of the activation (or reactivation) of the base station entity the system information block 1 is transmitted, especially broadcast, by the specific base station entity. This means that the user equipment actively seeks to attach to a network part or domain of a specific type by detecting only a master information block as part of the system information, wherein especially the user equipment transmits a single PRACH preamble or a set of multiple PRACH preambles (if applicable at successive points in time) in order to activate the specific base station entity.

Thereby, it is advantageously possible to cause an activation of the specific base station by emitting the specific uplink random access channel signal in an efficient manner, i.e. tailored to the communication needs of the requesting user equipment.

Furthermore, the present invention relates to a user equipment for being used with a mobile communication network and/or being configured for an energy-saving operation of the mobile communication network, wherein the user equipment is configured to communicate with the mobile communication network via a radio access network of the mobile communication network that comprises a plurality of base station entities, a specific base station entity being operated in an energy-saving mode and the specific base station entity being activated from the energy-saving mode by means of the user equipment transmitting a predefined uplink radiofrequency signal, wherein, in the energy-saving mode of the specific base station entity, the user equipment fails to receive system information block 1 therefrom, and the user equipment receives system information block 1 while the specific base station entity being activated from the energy-saving mode, wherein the user equipment is configured such that a predetermined uplink radiofrequency signal corresponds to a specific uplink random access channel signal assigned to the specific base station entity, wherein the user equipment is configured such that: the user equipment receives, from the specific base station entity and/or from a different base station entity, activation configuration information, the activation configuration information comprising at least a first piece of assignment information and a second piece of assignment information, wherein each piece of assignment information indicates at least one specific uplink random access channel signal and wherein each piece of assignment information and/or each specific uplink random access channel signal is associated to, or related to, at least one piece of validity time indication, the user equipment transmits, based on the content of the activation configuration information and based on a determination of a current point in time, one of the specific uplink random access channel signals in order to activate the specific base station entity from the energy-saving mode.

Still furthermore, the present invention relates to a system or mobile communication network for using a user equipment with the mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 at least once after having been activated from the energy-saving mode, wherein the predetermined uplink radiofrequency signal corresponds to a specific uplink random access channel signal being assigned to the specific base station entity,
wherein, in order to operate the mobile communication network, at least partly, in an energy-saving operation, the system or mobile communication network is configured such that: the user equipment receives, from the specific base station entity and/or from a different base station entity, activation configuration information, the activation configuration information comprising at least a first piece of assignment information and a second piece of assignment information, wherein each piece of assignment information indicates at least one specific uplink random access channel signal and wherein each piece of assignment information and/or each specific uplink random access channel signal is associated to, or related to, at least one piece of validity time indication, the user equipment transmits, based on the content of the activation configuration information and based on a determination of a current point in time, one of the specific uplink random access channel signals in order to activate the specific base station entity from the energy-saving mode.

Additionally, the present invention relates to a program comprising a computer readable program code, which, when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network , especially the base station entity, to perform the inventive method.

Still additionally, the present invention relates to a Computer-readable medium comprising instructions which when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network , especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

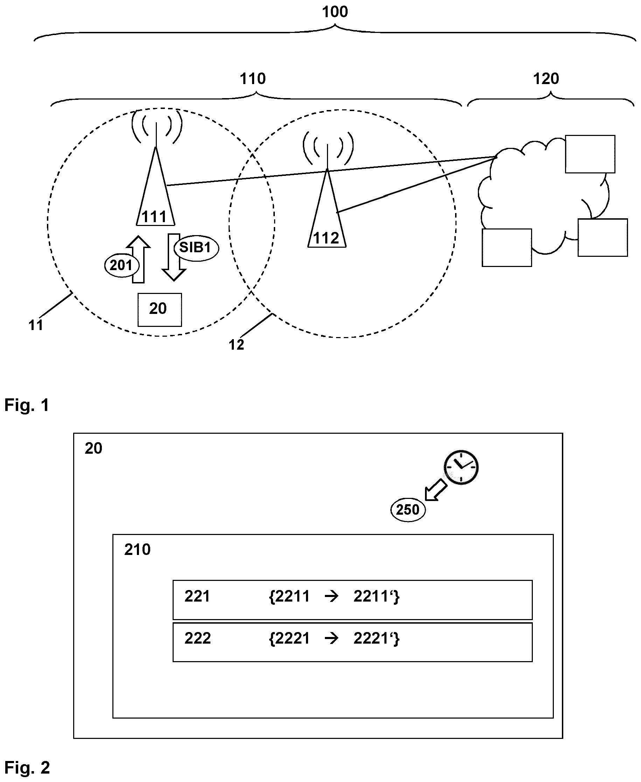

Figure 1 schematically illustrates the situation of a user equipment in a mobile communication network comprising a specific base station entity that is regularly transmitting a system information block 1 but may also be operated in an energy-saving mode from which it may be activated by the user equipment by the transmission of a predefined uplink radiofrequency signal.
Figure 2 schematically and exemplarily illustrates the activation configuration information as received by the user equipment. The activation configuration information comprises at least a first piece of assignment information and a second piece of assignment information, each piece of assignment information indicates at least one specific uplink random access channel signal and each piece of assignment information and/or each specific uplink random access channel signal is associated to, or related to, at least one piece of validity time indication. The pieces of assignment information are implemented as a table or tabular scheme.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The access network 110 or radio access network 110 comprises a plurality of radio cells 11, 12, i.e. geographical areas served, respectively, by base station entities. In the exemplary situation or scenario shown in Figure 1, a specific base station entity 111 generates or is associated with or spans the first (terrestrial) radio cell 11, and a different base station entity 112 generates or is associated with or spans the second (terrestrial) radio cell 12 (the first and second (terrestrial) radio cells 11, 12 being represented, in Figure 1, by means of dashed circles around the specific and different base station entity 111, 112, respectively). The specific and different base station entity 111, 112 typically realize gNB functionality or next-generation gNB functionality. The mobile communication network 100 is typically connected to a user equipment 20 (or, rather, the user equipment 20 is connected to the telecommunications network 100). The specific base station entity 111 is able to be operated in a first operational mode corresponding to a normal mode and in a second operational mode corresponding to an energy-saving mode. The conventional mode corresponds to the specific base station entity 111 transmitting radio frequency signals such that a system information block 1 SIB1 is received in the radio coverage area 11' of the specific base station entity 111 by the user equipment 20. This corresponds to the normal (and standardized) behaviour and situation of both the user equipment 20 and the specific base station entity 111 in which the system information block 1 SIB1 is transmitted in succession to the transmission of a master information block. Especially, in such a conventional (or normal) mode of the specific base station entity, at least a part of such system information - especially corresponding to system information block 1 SIB1 - is repeatedly transmitted, especially broadcast, by the specific base station entity in its corresponding radio coverage area, e.g. repeatedly every 80 ms or at a higher or lower repetition period. According to the present invention, the base station entity is able to be operated in the energy-saving mode which corresponds to the specific base station entity 111 refraining from transmitting the system information block 1 SIB1 (especially for periods of time longer (especially considerably longer, such as, e.g., at least, say, several hours) than a normal repetition period, or longer than even an increased repetition period). This means that at least during power saving time intervals the system information block 1 SIB1 is not provided in the radio coverage area 11 of the specific base station entity 111 as the transmitter chain of the specific base station entity 111 is at least partly switched off (or is partly deactivated) in the energy-saving mode. While the specific base station entity 111 is operated in the energy-saving mode, by transmission of a predefined uplink radiofrequency signal 201 corresponding to a specific uplink random access channel signal, the user equipment 20 is able to activate the specific base station entity 111 causing it to, upon and/or as a consequence of reception of the predefined uplink radiofrequency signal 201, switch back to the normal operational mode.

In Figure 2, the user equipment 20 having received an activation configuration information 210 is shown in a schematic representation. The activation configuration information 210 has been received by the user equipment 20 either from the specific base station entity 111 and/or from the different base station entity 112 by means of control plane signaling or system information signaling, especially transmitted via broadcast transmission and/or via dedicated transmission and/or dedicated non-access stratum signaling, especially at registration of the user equipment 20 and/or by means of a location update of the user equipment 20 and/or by means of dedicated access stratum signaling, especially at registration of the user equipment 20 and/or by means of a location update of the user equipment 20 and/or by means of any radio resource control procedure during the normal operation of the user equipment 20 and/or by broadcast of system information, especially using a specific system information block.
The activation configuration information 210 comprises a first and a second piece of assignment information 221, 222 which are implemented, e.g., as a table or tabular scheme. Each piece of assignment information 221, 222 might correspond to a row of such a table or tabular scheme. The first column of the table or tabular scheme might comprise specific uplink random access channel signals 2211, 2221 - or indications thereto -, especially random access channel preambles, or RACH preambles, or especially physical random access channel preambles, or PRACH preambles, wherein especially different physical random access channel preambles or PRACH preambles are preferably generated by applying cyclic shifting by specific values to Zadoff Chu sequences within the frequency domain. Each one of the specific uplink random access channel signals 2211, 2221 - that are to be used as the predefined uplink radiofrequency signal 201 to be transmitted by the user equipment 20 in different cases or situations - and/or each piece of assignment information 221, 222 is associated to, or related to, at least one piece of validity time indication 2211', 2221'. Thus, the second column (schematically represented in Figure 2) contains a first piece of validity time indication 2211' and a second piece of validity time indication 2221' that is associated, or related to, the first piece of assignment information 221, and, respectively, to the second piece of assignment information 222. By means of the pieces of assignment information 221, 222 given by the table or tabular scheme, the user equipment 20 is therefore able to perform a selection of a particular specific uplink random access channel signal 2211, 2221 - and thereby, especially, also of a particular base station - such as the specific base station 111 - that is to be activated. The selection is performed, based on the content of the activation configuration information 210 and based on a determination of a current point in time 250, using either the first or the second specific uplink random access channel signal 2211, 2221 (or any further specific uplink random access channel signal which is not schematically represented in Figure 2), wherein the selection of the piece of assignment information 221, 222 (i.e. the selection of the specific uplink random access channel signal 2211, 2221) depends on the associated or related piece of validity time indication 2211', 2221', i.e. depends on a content of an information about when the associated or related piece of assignment information is valid, or, alternatively or complementary, an information about when it is invalid. The piece of validity time indication 2211', 2221' may indicate or correspond to a future or a past point in time, such as, especially, a first point in time and a subsequent second point in time and/or to time intervals defined by pairs of these points in time, the comparison with which allowing for time-dependent selection of a particular piece of assignment information 2211, 2221 based on a determination of a current point in time 250. Any of these points in time may be defined or expressed using an absolute validity time reference such as seconds or milliseconds after 0 am on first January 1900 according to the Gregorian calendar, corresponding to midnight between Sunday, 31 December 1899, and Monday, first January 1900 or such as the non-leap seconds or non-leap milliseconds or non-leap microseconds or non-leap nanoseconds that have elapsed since 00:00:00 UTC on 1 January 1970, i.e. since the Unix epoch.

## Claims

1. Method for using a user equipment (20) with a mobile communication network (100) and/or for an energy-saving operation of the mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) at least once after having been activated from the energy-saving mode,
wherein the predetermined uplink radiofrequency signal (201) corresponds to a specific uplink random access channel signal being assigned to the specific base station entity (111),
wherein, in order to operate the mobile communication network (100), at least partly, in an energy-saving operation, the method comprises the following steps:
-- in a first step, the user equipment (20) receives, from the specific base station entity (111) and/or from a different base station entity (112), activation configuration information (210), the activation configuration information (210) comprising at least a first piece of assignment information (221) and a second piece of assignment information (222), wherein each piece of assignment information (221, 222) indicates at least one specific uplink random access channel signal (2211, 2221) and wherein each piece of assignment information (221, 222) and/or each specific uplink random access channel signal (2211, 2221) is associated to, or related to, at least one piece of validity time indication (2211', 2221'),
-- in a second step, the user equipment (20) transmits, based on the content of the activation configuration information (210) and based on a determination of a current point in time (250), one of the specific uplink random access channel signals (2211, 2221) in order to activate the specific base station entity (111) from the energy-saving mode.

2. Method according to claim 1, wherein the specific uplink random access channel signal (2211, 2221) - being used, in the second step, to activate the specific base station entity (111) from the energy-saving mode - is associated to, or related to, a piece of validity time indication (2211', 2221') indicating, or corresponding to, the current point in time (250),
wherein especially, the user equipment (20) selects the specific uplink random access channel signal (2211, 2221) based on the current point in time (250) as well as based on the piece of validity time indication (2211', 2221') associated or related to the specific uplink random access channel signal (2211, 2221).

3. Method according to one of the preceding claims, wherein the piece of validity time indication (2211', 2221') indicates, or defines, a specific point in time, wherein the specific point in time defines a point in time
-- until which the respective associated or related specific uplink random access channel signal (2211, 2221) is valid and after which it is invalid,
or
-- after which the respective associated or related specific uplink random access channel signal (2211, 2221) is valid and until which it is invalid.

4. Method according to one of the preceding claims, wherein the piece of validity time indication (2211', 2221') indicates, or defines, a specific time interval, especially being defined by a first point in time and a second point in time, wherein the specific time interval especially defines the time interval
-- during which the respective associated or related specific uplink random access channel signal (2211, 2221) is valid and outside of which it is invalid,
or
-- during which the respective associated or related specific uplink random access channel signal (2211, 2221) is invalid and outside of which it is valid.

5. Method according to one of the preceding claims, wherein the piece of validity time indication (2211', 2221') indicates, or defines, the specific point in time or the specific time interval, especially the first and second point in time, by means of using an absolute validity time reference,
especially an absolute validity time reference referring to the number of seconds or milliseconds after 0 am on first January 1900 according to the Gregorian calender, corresponding to midnight between Sunday, 31 December 1899, and Monday, first January 1900.

6. Method according to one of the preceding claims, wherein the user equipment (20) receives the activation configuration information (210)
-- from the specific base station entity (111), using control plane signaling or system information signaling, especially transmitted via broadcast transmission and/or via dedicated transmission, and/or
-- from a different base station entity (112) using control plane signaling or system information signaling, especially transmitted via broadcast transmission and/or via dedicated transmission, wherein especially such system information signaling indicates the specific base station entity (111), or a group of base station entities comprising the specific base station entity (111), and/or
-- from the specific base station entity (111) or from a different base station entity (112) using dedicated non-access stratum signaling or access stratum signaling, especially at registration of the user equipment (20) and/or at location update of the user equipment (20), and/or using any radio resource control procedure during normal operation of the user equipment (20).

7. Method according to one of the preceding claims, wherein the predetermined uplink radiofrequency signal (201) corresponds to
-- a random access channel, RACH, signal, especially a specific random access channel preamble, or to
-- a physical random access channel, PRACH, signal, especially a specific physical random access channel preamble,
wherein especially each such preamble corresponds to being transmitted, by the user equipment (20), at a specific point in time, especially a regularly repeating point in time, and to transmitting, by the user equipment (20), a radiofrequency signal being coded using a specific transmission parameter, especially a specific cyclic shift value.

8. User equipment (20) for being used with a mobile communication network (100) and/or being configured for an energy-saving operation of the mobile communication network (100), wherein the user equipment (20) is configured to communicate with the mobile communication network (100) via a radio access network (110) of the mobile communication network (100) that comprises a plurality of base station entities (111, 112), a specific base station entity (111) being operated in an energy-saving mode and the specific base station entity (111) being activated from the energy-saving mode by means of the user equipment (20) transmitting a predefined uplink radiofrequency signal (201),
wherein, in the energy-saving mode of the specific base station entity (111), the user equipment (20) fails to receive system information block 1 (SIB1) therefrom, and the user equipment (20) receives system information block 1 (SIB1) while the specific base station entity (111) being activated from the energy-saving mode,
wherein the user equipment (20) is configured such that a predetermined uplink radiofrequency signal (201) corresponds to a specific uplink random access channel signal (2011) assigned to the specific base station entity (111),
wherein the user equipment (20) is configured such that:
-- the user equipment (20) receives, from the specific base station entity (111) and/or from a different base station entity (112), activation configuration information (210), the activation configuration information (210) comprising at least a first piece of assignment information (221) and a second piece of assignment information (222), wherein each piece of assignment information (221, 222) indicates at least one specific uplink random access channel signal (2211, 2221) and wherein each piece of assignment information (221, 222) and/or each specific uplink random access channel signal (2211, 2221) is associated to, or related to, at least one piece of validity time indication (2211', 2221'),
-- the user equipment (20) transmits, based on the content of the activation configuration information (210) and based on a determination of a current point in time (250), one of the specific uplink random access channel signals (2211, 2221) in order to activate the specific base station entity (111) from the energy-saving mode.

9. System or mobile communication network (100) for using a user equipment (20) with the mobile communication network (100) and/or for an energy-saving operation of the mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) at least once after having been activated from the energy-saving mode,
wherein the predetermined uplink radiofrequency signal (201) corresponds to a specific uplink random access channel signal being assigned to the specific base station entity (111),
wherein, in order to operate the mobile communication network (100), at least partly, in an energy-saving operation, the system or mobile communication network (100) is configured such that:
-- the user equipment (20) receives, from the specific base station entity (111) and/or from a different base station entity (112), activation configuration information (210), the activation configuration information (210) comprising at least a first piece of assignment information (221) and a second piece of assignment information (222), wherein each piece of assignment information (221, 222) indicates at least one specific uplink random access channel signal (2211, 2221) and wherein each piece of assignment information (221, 222) and/or each specific uplink random access channel signal (2211, 2221) is associated to, or related to, at least one piece of validity time indication (2211', 2221'),
-- the user equipment (20) transmits, based on the content of the activation configuration information (210) and based on a determination of a current point in time (250), one of the specific uplink random access channel signals (2211, 2221) in order to activate the specific base station entity (111) from the energy-saving mode.

10. Program comprising a computer readable program code, which, when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according to one of claims 1 to 7.

11. Computer-readable medium comprising instructions which when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according to one of claims 1 to 7.
